# EUROPEAN PATENT SPECIFICATION

(11) **EP 3 390 876 B1**
(45) Date of publication and mention of the grant of the patent: **24.04.2019**
(21) Application number: 16825924.0
(22) Date of filing: 14.12.2016
(51) Int. Cl.: F16L 1/24

(54) **A SYSTEM AND METHOD FOR COVERING A STRUCTURE ON A SEABED**
SYSTEM UND VERFAHREN ZUM ABDECKEN EINER STRUKTUR AUF EINEM MEERESBODEN
SYSTÈME ET PROCÉDÉ DE RECOUVREMENT D'UNE STRUCTURE SUR UN PLANCHER OCÉANIQUE

(30) Priority: 15.12.2015 NO 20151716
(43) Date of publication of application: 24.10.2018
(73) Proprietor: Øren, Anders Kjell, 6142 Eidså (NO)
(72) Inventor: Øren, Anders Kjell, 6142 Eidså (NO)
(74) Representative: Zacco Norway AS
(86) International application number: PCT/NO2016/050261
(87) International publication number: WO 2017/105252

(56) References cited:
- EP-A2- 0 152 232
- GB-A- 1 585 860
- NL-C2- 1 021 278
- US-B1- 6 406 217

## Description

### Field of the invention

The invention concerns a system and method for at least partly covering at least one structure on a seabed, comprising a resilient covering element, a suspension device, and a plurality of connection means, as set out by the preamble of claim 1.

### Background of the invention

In order to secure pipelines and other underwater installations to the seabed, mats with a high specific weight are commonly used. Such mats are often articulated, by means of several concrete blocks attached to each other. After the pipeline or underwater installation has been placed on the seabed, such a mat is placed on top such that the weight of the mat stabilizes the underlying structure. When lifted into the sea, and placed on the seabed, the mats are lowered from ships or other floating vessels by means of a crane operated by an operator. Along e.g. a pipeline, several mats can be placed along the length of the pipeline, the mats being spaced a distance apart from each other. The durability of such a concrete mat protects the underlying structure from trawls and other hazards, and also prevents erosion of the adjoining seabed. Offshore, and in places with strong hydrodynamic forces generated by bottom currents and waves, such stabilization of a pipeline or similar is crucial. In order to place the mat onto the installation and the seabed, a number of structures to support the mat exist.

Related art includes US 6106194 A which describes a mat support system, wherein there is included a series of slings supporting a mat, wherein the slings are releasable from a position where the mats are supported to a position where the mat is released. The release mechanism substantially simultaneously releases all supports for the mats.

US 6406217 B1 describes a lifting and placement device for seabed mats. The device has a frame made of a first and second support beam each of which have a release shaft located adjacent thereto. The release shafts are rotatably engaged to a central actuation shaft that when turned cause the release shafts to rotate thereby removing displaceable support pins from retaining supports. Once the support pins are released from the supports, a seabed mat which is supported below the device is released on all sides of the frame.

CN 102249143 A describes an underwater rapid-decoupling type lifting frame for releasing cement briquettes. The lifting frame provided by the invention comprises a frame main body, wherein the frame main body is connected with a tie rod unit into a whole through multiple guiding units arranged in the middle of the frame main body; and the tie rod unit is provided with a control device used for driving the tie rod unit to slide.

Still, a problem with such use of mats is to correctly and accurately place the mats on the pipeline or underwater installation to be protected. If the mat does not sufficiently cover the pipeline or installation it may not serve the intended purpose, or, alternatively, it takes the operator a long time to correctly place the mat on the installation and seabed. Therefore, there is a need in the art for a suspension device for a seabed mat that accurately places the mat on top of a pipeline or similar structure. There is a further need for a suspension device for a seabed mat that allows the operator visibility and control of the mat to be placed, and which will allow accurately placing the mat in deep water with high accuracy.

### Summary of the invention

The invention is set forth and characterized in the main claim, while the dependent claims describe other characteristics of the invention.

It is thus provided a system for at least partly covering a structure on a seabed, comprising a resilient covering element, a suspension device, and a plurality of connection means. The connection means are releasably connected to the suspension device and the resilient covering element. The plurality of connection means are arranged in at least three rows on the suspension device, a central row generating a vertex on the middle portion of the resilient covering element, and a cavity is formed underneath at least a portion of the resilient covering element.

In one embodiment, the cavity is formed by a vertex and one nadir on each side of the vertex as two outer sides of the resilient covering element are connected to the two outermost rows of connection means; the nadirs being configured for placement on the seabed on respective sides of the structure.

In one embodiment, a nadir on the resilient covering element is formed between two adjacent rows of connection means.

In one embodiment, the structure is a tubular member, and the cavity is a tunnel at least partly convoluting the tubular member.

In one embodiment, the resilient covering element is a mat.

In one embodiment, the connection means are slings.

In one embodiment, the suspension device comprises a frame having longitudinal and transversal beam elements.

It is also provided a method of at least partly covering a structure on a seabed with a resilient covering element. The method comprises the steps of:
suspending the resilient covering element in at least three rows below a suspension device;
forming a cavity underneath at least a portion of the resilient covering element by connecting a middle row (22) to a middle portion of the resilient covering element, said cavity at least partly corresponding to the shape of the structure;
lowering the resilient covering element in a body of water above the structure;
placing the resilient covering element over the structure such that the structure is received in the cavity;
releasing the resilient covering element from the suspension device.

In one embodiment, the covering element is automatically released from the suspension device.

In one embodiment, the resilient covering element is suspended in at least three rows of connection means, said connection means being releasably connected to the suspension device.

In one embodiment, the cavity is formed by a vertex and one nadir on each side of the vertex.

In one embodiment, a central row of connection means generates a vertex.

In one embodiment, the cavity is tunnel shaped.

In one embodiment, the structure is a tubular member.

### Brief description of the drawings

These and other characteristics of the invention will become clear from the following description of a preferential form of embodiment, given as a non-restrictive example, with reference to the attached schematic drawings, wherein:
Figure 1 is a perspective view of a suspension device for seabed mats, and illustrates an articulated seabed mat suspended in slings below the suspension device.
Figure 2 is a front view of a mat suspended in slings below the suspension device. The mat has a longitudinal shape of a W, and, in the illustrated instant, the mat is in its final position over a pipeline on the seabed before the mat is released from the slings of the suspension device.
Figure 3 is a detail view which illustrates how the slings connect the mat to the suspension device.
Figure 4 is a detail view which illustrates how the releasable end of a sling is connected to the suspension device.
Figure 5 is a perspective view similar to that in figure 1, and illustrates a second embodiment of a suspension device for seabed mats. The suspension device is equipped with propellers and cameras.

### Detailed description of a preferential embodiment

The following description may use terms such as "horizontal", "vertical", "lateral", "longitudinal", "upper", "lower", "forward", "rear", etc. These terms generally refer to the views and orientations as shown in the drawings and that are associated with a normal use of the invention. The terms are used for the reader's convenience only and shall not be limiting.

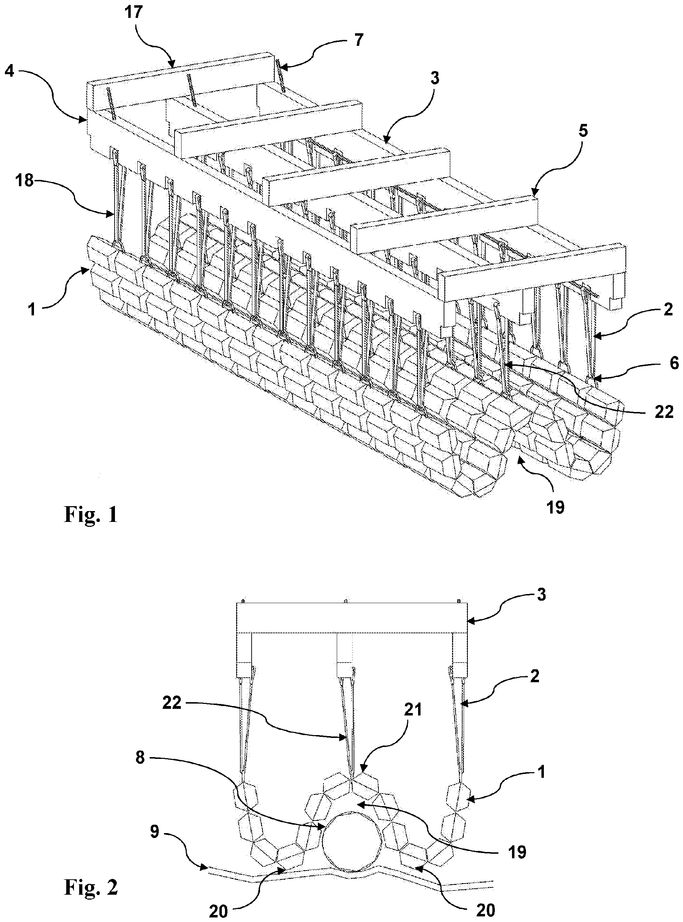

Figure 1 shows a mat 1 suspended in slings 2 below the invented suspension device 3. Such a mat 1 is well known in the art and comprises several concrete elements connected to each other by connectors such as metal wires or loops, fibre bands, etc. The connectors could be founded and anchored in the elements, and connected to each other to thereby form an articulated mat. The mat 1 can also comprise other elements such as metal or plastic elements, but concrete is the most common material for such applications today. The net weight of such a mat can be from a few tonnes up to 10 tonnes and more, depending on the material it is made of. Mats of the most common type weighing about 6-7 tonnes, thereby requiring lifting equipment of high strength. The mat 1 is as such a resilient covering element, used to cover structures on the seabed.

The suspension device 3 is suspended in cables (not shown in the figure) to a crane operated by personnel on a vessel or similar, as is commonly known in the art. The suspension device 3 will typically have four lifting points connecting the suspension device 3 to a crane.

In order to deploy a mat 1 at a subsea location, e.g. to cover a pipeline resting on the seabed, the mat 1 is suspended in slings 2 to the suspension device 3. The mat 1 is typically interconnected to the suspension device 3 on board a vessel or similar. For reasons of clarity, in the figures only one of the pluralities of slings 2 is provided with a reference sign. The slings 2 are commonly made of high strength fibres which are capable of sustaining the weight of the mat 1. The slings 2 are commonly made of nylon or a similar material, and are generally flexible but static, such that the slings 2 can bend and curl like a rope, but they do not elongate much in the longitudinal direction. Slings 2 for suspending seabed mats 1 are well known in the art and are not disclosed further here. The number of slings 2 used to suspend the mat 1 depends on the weight and stiffness of the mat 1, but typically one sling 2 is connected to a metal loop 6 between each concrete element. Metal loops 6 are present on most articulated mats along the outer periphery. Alternatively, the slings 2 can be thread through the connectors located between each concrete element, and as such the slings 2 can be connected to the mat 1 at several different locations.

The suspension device 3, also referred to as a yoke, comprises longitudinal main beams 4. In the illustrated embodiment, three such longitudinal beams 4 are shown. Transversal beams 5 are positioned on top of the longitudinal beams 4 and fixated thereto, such that the longitudinal beams 4 and transversal beams 5 altogether form a stiff framework or frame 17. The transversal beams 5 acts as cross support members. The longitudinal beams 4 and the transversal beams 5 (i.e. the frame 17) may be made of steel or any other metal common in the art, or even composite materials with a sufficient structural strength. The beams 4,5 may be hollow so as to reduce the weight of the suspension device 3, and allow equipment (motors, cables, etc.) to be stored or mounted inside the beam elements 4,5.

In figure 1, five such transversal beams 5 are shown. In the figure, only one of the main beams 4 and one of the transversal beams 5 are provided with reference signs. The transversal beams 5 can also be positioned in between the longitudinal beams 4, i.e. at the same height as the longitudinal beams 4, or in any other way such as to connect the longitudinal beams 4 a fixed distance apart. The slings 2 are releasably connected to the longitudinal beams 4 along the length of the three longitudinal beams 4, such that the slings 2 in the illustrated embodiment are arranged in three parallel, longitudinal rows 18 on the suspension device 3. The rows 18 of slings 2 are equally spaced apart, and thus, in the illustrated embodiment, comprise two outer rows and a middle or central row 22. The central row 22 of slings 2 is advantageously positioned in the centre between the two outer rows, but could also be positioned closer towards one of the outer rows, thereby forming an asymmetrical suspension device 3.

When the mat 1 is securely connected to the suspension device 3, the suspension device 3 is lifted up by a crane or similar means (not illustrated in the figures). As the mat 1 is suspended in three rows 18, the mat 1 forms a predetermined shape. In the shown embodiment, the mat has a shape of a W, seen in the longitudinal direction of the suspension device 3, and a channel 19 is formed on the underside of the mat 1. This is described more in detail with reference to figure 2. The suspension device 3 could also be equipped with more than three rows 18 of slings, in order to control the shape of the mat 1 even better, and distribute the weight from the mat 1 to the lifting frame 3 more evenly. If the suspension device has more than three rows 18 of slings 2 this enables the suspension device 3 to suspend and shape a mat 1 with two or more channels 19. Such a configuration is advantageous when covering two or more pipelines, arranged in parallel on the seabed, simultaneously. Four rows 18 of slings 2 are sufficient in order to generate a mat 1 with two channels 19. Alternatively, more than three rows 18 of slings 2 could also be utilized in order to shape e.g. one large cavity 19, which could be useful when covering structures having a width up to approximately the same as that of the mat.

When the mat 1 is interconnected to, and resting below, the suspension device 3, the next operation is to lower the mat 1 into the sea, and ultimately lower it down to the structure on the bottom of the sea. The mat 1 is placed above the pipeline or structure to be covered as described more in detail with reference to figure 2.

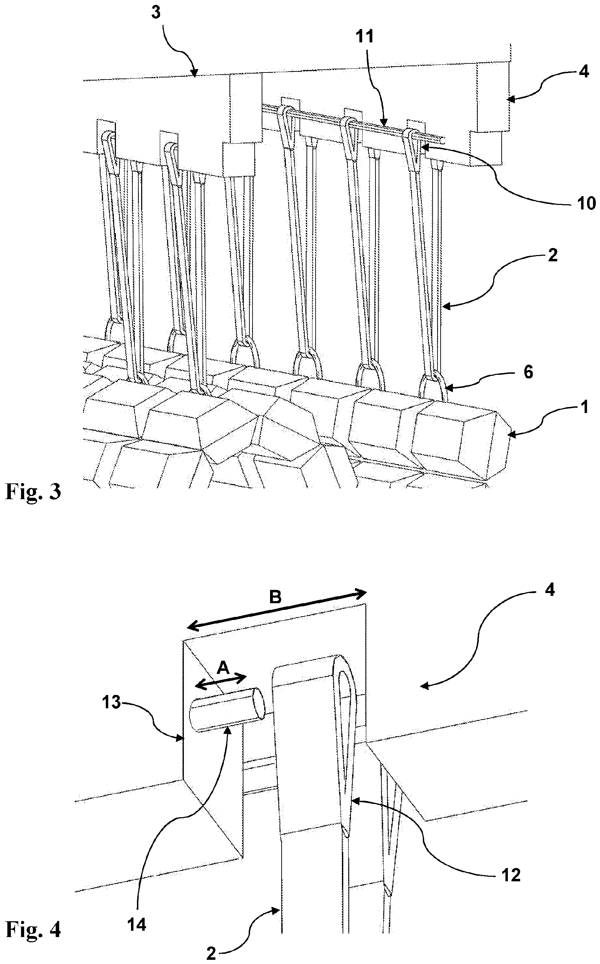

In order to release the mat 1 from the suspension device 3, an actuation handle 7 placed atop each of the longitudinal beams 4 must be activated. The actuation handle 7 can be placed anywhere on the suspension device 3, but must be accessible by a ROV, which will typically trigger the actuation handles 7, as is commonly known in the art. As such, the release handle 7 has to be large enough to accommodate the grip of an ROV or similar. A ROV can also assist during the operation of lowering and positioning the suspension device 3 and mat 1, and will as such provide the operator on board the deployment vessel with visual input. The ROV operates in cooperation with the crane operator which controls the movement of the suspension device 3, based on the input the ROV provides. When the mat 1 is manoeuvred and placed on the desired place on the seabed, e.g. above one or more pipelines, the ROV triggers the actuation handle 7. Upon activation of the actuation handle 7, the slings 2 are released from the longitudinal beams 4, and the mat 1 will settle on the desired location on the seabed. The slings 2 are releasably connected to the longitudinal beams 4 in a manner which is described in further detail with reference to figure 3 and 4.

Alternatively, the suspension device 3 can be equipped with an automatic actuation mechanism in form of an accumulator with an oil side and a nitrogen side. This accumulator is pre-loaded on the surface with respect to the depth of the sea where the mat 1 is to be placed. Further, a responder is equipped in connection with the automatic actuation mechanism, and a transducer on the vessel side of the surface. The transducer can alternatively also be used with the hipap system on board the vessel; this is dependent on the equipment level of the vessel. In this embodiment, an operator can send a signal from the surface vessel, either from hipap screen on the bridge, or a remote slave panel on a different location on board the vessel. The responder on the automatic actuation system on the suspension device receives the signals and the slings 2 are released from the longitudinal beams 4. An automatic actuation mechanism can also comprise a loaded spring which upon actuation pushes a cylinder forward, thereby releasing the slings.

When spread flat out, a concrete mat 1 typically has a rectangular shape. When connected to the suspension device 3, the two longest, outer sides of the mat 1 are connected to the two outermost rows 18 of slings 2. The middle portion (in the longitudinal direction) of the mat 1 is connected to the middle row 22 of slings 2. In this configuration, if the suspension device 3 is elevated, the mat 1 is thereby suspended in three rows of slings 2, and the mat 1 adopts the shape of a W seen in the longitudinal direction, as shown in figure 2. As mats 1 generally have a rectangular shape, they are placed atop pipelines such that the longitudinal direction of the mat 1 coincides with the longitudinal direction of the pipeline, and it is therefore advantageously that the middle portion of the mat 1 in the longitudinal direction is elevated, such that at least the middle portion of the mat 1 is formed like channel 19. This channel 19 provides for efficient placement of the mat 1 on a tubular structure resting on the seabed, as is described more in detail with reference to figure 2.

The slings 2 can have different lengths such that the shape of the W, or any other shape of the mat 1, can be finely tuned or adjusted in order to achieve the optimal shape for one particular task. In the shown embodiment, the slings 2 along the three rows 18 are all approximately the same length, but if for example the slings 2 of the two outer rows are longer than the slings 2 of the middle row 22, the longitudinal shape of the mat 1 could have the shape of a reversed V, or similar. If covering large pipes and structures, such a shape is advantageous when placing the mat 1. A problem today when placing mats onto structures on the sea bed is generally not to release the mat from the suspension device, but to actually place the mat correctly on the structure to be covered by the mat. Oftentimes, the mat must be lowered and lifted several times before the mat is positioned sufficiently on the structure and sea bed, and such a task can be both cumbersome and is time consuming.

Figure 2 shows the mat 1 suspended in slings 2 below the suspension device 3. The mat 1 is positioned above a pipeline 8 resting on a seabed 9. The channel 19 on the underside of the mat 1 has a high point 21, also referred to as a vertex, where the central row 22 of slings 2 is connected to the mat 1. On each side of the high point 21 is a low point or nadir 20, such that the channel 19 of the mat 1 has a shape generally corresponding to that of the pipeline 8. As the mat 1 has the shape of a channel or tunnel 19, it is easy for the operator of the lifting crane to place the mat 1 in an advantageous position on the pipeline 8, with the pipeline 8 accommodated in the channel 19. As the mat 1 is suspended in a shape which forms a raised middle portion 21, a pipeline 8 or similar installation with a protruding portion will easily be accommodated in the channel 19 of the mat 1. Even if the mat 1 is not entirely correctly positioned relative to the pipeline 8 when the mat 1 is lowered onto the pipeline 8, the channel 19 will receive the pipeline 8 and contribute to a self-centring effect of the mat 1 on the pipeline 8. Especially if there are strong currents or limited visibility, such a self-centring effect will greatly reduce the time needed to place mats 1 along a pipeline 8. Other installations or objects to be covered, with a similar raised portion, will also add to the ease of positioning of the mat 1.

Figure 3 shows how the slings 2 are fixedly connected to the longitudinal beams 4. Each sling 2 has one loop at either end, and at the end of the sling which is fixedly connected to the longitudinal beam 4 the loop 10 is penetrated by a rod 11, such that the rod 11 secures the loop 10 and as such the sling 2 to the suspension device 3. The rod 11 is removably attached to the longitudinal beam 4 by means known in the art, such that one or several slings 2 can easily be replaced if they experience reduced lifting capacity due to wear, abrasion and the like. The slings 2 will also have to be replaced if a longer or shorter set of slings 2 are required in order to alter the shape of the suspended mat 1, e.g. for a specific lifting task. In such occasions, all the slings 2 along one longitudinal beam 4 will normally be replaced. During normal use, however, the loop 10 is locked in place by the rod 11.

The slings 2 are tread through a metal loop 6 which is connected to the concrete mat 1, such means of connecting the slings 2 to the mat 1 are well known in the art. The slings 2 could also be interconnected to the aforementioned connectors located between each of the concrete elements, thus enabling the slings 2 to be interconnected to the mat 1 anywhere on the mat 1 between each concrete element. When the mat 1 is suspended below the suspension device 3, the slings experience tensile forces which are distributed approximately evenly to both ends of the slings 2.

Figure 4 shows how the slings 2 are releasably connected to the longitudinal beams 4. The end of the sling 2 which is not fixedly connected to the longitudinal beam 4 has a loop 12 which is positioned in a recess 13 in the longitudinal beam 4 when connected to the longitudinal beam 4. A peg or pin 14 is displaceable and movable in a direction indicated by the arrow A in figure 4 from a locked position to an open position, i.e. from an extended position to a retracted position. In the locked position, the pin 14 penetrates the loop 12 of the sling 2 and thus secures the loop 12 and that end of the sling 2 to the longitudinal beam 4 in the recess 13. The locked position of the pin 14 is thus when the pin 14 extends a length corresponding at least to the width of the recess 13. The width of the recess 13 is indicated by the arrow B in the figure, and in the figure, the pin would be extended all the way to the right when in the locking position.

In the open position, the pin 14 is retracted into the longitudinal beam 4, i.e. to the left in the figure. The pin 14 must be retracted sufficiently such that there is no risk of the loop 12 not being released from the pin 14. In figure 4, the pin 14 is shown partly retracted into the longitudinal beam 4, and for visualizing purposes the loop 12 is also illustrated in the recess 13. The pin 14 is retracted into the longitudinal beam 4 by activation of the actuation handle or automatic actuation mechanism as described above with reference to figure 1. The pin 14 is pushed out from the retracted position to the locking position by means of the actuation handle described with reference to figure 1.

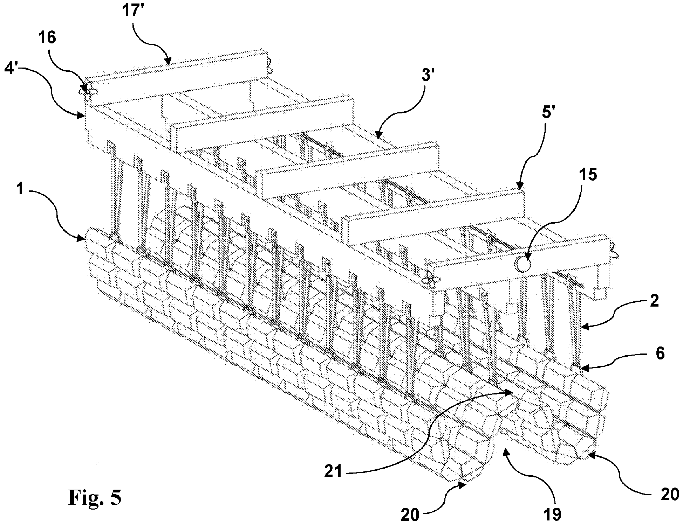

Figure 5 shows a suspension device 3' according to another embodiment of the invention. In contrast to the previous embodiments where a ROV is needed in order to provide visual input of the suspension device to the operator, cameras 15 are mounted on the frame 17' of the suspension device 3' which provide the operator with visual input. Visual input from the cameras 15 will further enhance the operator's control of the mat 1, such that the operator can accurately orientate and position the mat 1 on the seabed. Such cameras can be mounted on the transversal beams 5' and be of the wide-angle type, such that the field of view covers both the outer perimeter of the mat 1 and the area in front and rear of the suspension device 3'. Even if not visible in the figure, it is to be understood that a camera 15 is also positioned on the rear part of the longitudinal beam 5', such that video input is provided from both sides of the suspension device 3'. Cameras 15 can also be provided on the two longitudinal sides of the suspension device 3', and, alternatively, cameras can even be fitted on the lifting cable, or anywhere suitable in order to provide a complete overview of the suspension device 3' and surroundings.

The suspension device 3' in figure 5 is equipped with propellers 16, one in each corner of the lifting frame 3'. These propellers are driven by motors located e.g. inside the transversal beams, and are operated by an operator on the surface vessel. The propellers 16 are activated in order to control the rotation of the lifting frame 3', and as such assist with the positioning of the lifting frame 3' relative to the seabed and e.g. a pipeline. Apart from these differences, the description of the first embodiment shall apply.

The actuation device can be triggered by a signal in the umbilical of the suspension device, or by a transducer as previously described.

While the invention has been illustrated and described in detail in the drawings and foregoing description, such illustration and description are to be considered illustrative or exemplary and not restrictive and it is not intended to limit the invention to the disclosed embodiments. It should be understood that modifications and/or additions can be made to the suspension device, but these shall remain within the field and scope of the invention.

## Claims

1. A system for at least partly covering a structure (8) on a seabed (9), comprising a resilient covering element (1), a suspension device (3), and a plurality of connection means (2), the connection means (2) are releasably connected to the suspension device (3) and the resilient covering element (1), **characterized in that** the plurality of connection means (2) are arranged in at least three rows (18) on the suspension device (3), a middle portion of the resilient covering element (1) is suspended by a central row (22), and a cavity (19) is formed underneath at least a portion of the resilient covering element (1).

2. The system according to claim 1, wherein the cavity (19) is formed by a vertex (21) and one nadir (20) on each side of the vertex (21) as two outer sides of the resilient covering element (1) are connected to the two outermost rows (18) of connection means (2); the nadirs (20) being configured for placement on the seabed (9) on respective sides of the structure (8).

3. The system according to claim 2, wherein a nadir (20) on the resilient covering element (1) is formed between two adjacent rows (18) of connection means (2).

4. The system according to any one of the preceding claims, wherein the structure (8) is a tubular member, and the cavity (19) is a tunnel adapted to at least partly convolute the tubular member.

5. The system according to any one of the preceding claims, wherein the resilient covering element (1) is a mat.

6. The system according to any one of the preceding claims, wherein the connection means (2) are slings.

7. The system according to any one of the preceding claims, wherein the suspension device (3) comprises a frame (17) having longitudinal and transversal beam elements (4, 5).

8. A method of at least partly covering a structure (8) on a seabed (9) with a resilient covering element (1), **characterized by** the steps of:
a) suspending the resilient covering element (1) in at least three rows (18) below a suspension device (3);
b) forming a cavity (19) underneath at least a portion of the resilient covering element (1) by connecting a middle row (22) to a middle portion of the resilient covering element (1),;
c) lowering the resilient covering element (1) in a body of water above the structure (8);
d) placing the resilient covering element (1) over the structure (8) such that the structure (8) is received in the cavity (19);
e) releasing the resilient covering element (1) from the suspension device (3).

9. The method according to claim 8, wherein the covering element (1) is automatically released from the suspension device (3).

10. The method according to any one of claims 8 - 9, wherein the cavity (19) is formed by a vertex (21) and one nadir (20) on each side of the vertex (21).

11. The method according to any one of claims 8 - 10, wherein a central row of connection means (2) generates a vertex (21).

12. The method according to any one of claims 8 - 11, wherein the cavity (19) is tunnel shaped.

13. The method according to any one of claims 8 - 12, wherein the structure (8) is a tubular member.

## Patentansprüche

1. System zum zumindest teilweisen Abdecken einer Struktur (8) auf einem Meeresboden (9), umfassend ein elastisches Abdeckelement (1), eine Aufhängungsvorrichtung (3) und eine Vielzahl von Verbindungsmitteln (2), wobei die Verbindungsmittel (2) mit der Aufhängungsvorrichtung (3) und dem elastischen Abdeckelement (1) lösbar verbunden sind, **dadurch gekennzeichnet, dass** die Vielzahl von Verbindungsmitteln (2) in mindestens drei Reihen (18) auf der Aufhängungsvorrichtung (3) angeordnet sind, ein zentraler Abschnitt des elastischen Abdeckelements (1) durch eine zentrale Reihe (22) aufgehängt ist, und ein Hohlraum (19) unterhalb zumindest eines Abschnitts des elastischen Abdeckelements (1) gebildet ist.

2. System nach Anspruch 1, wobei der Hohlraum (19) durch einen Scheitel (21) und einen Tiefpunkt (20) an jeder Seite des Scheitels (21) gebildet ist, indem zwei Außenseiten des elastischen Abdeckelements (1) mit den zwei äußersten Reihen (18) von Verbindungsmitteln (2) verbunden sind; wobei die Tiefpunkte (20) zum Anordnen auf dem Meeresboden (9) auf jeweiligen Seiten der Struktur (8) ausgelegt sind.

3. System nach Anspruch 2, wobei ein Tiefpunkt (20) am elastischen Abdeckelement (1) zwischen zwei benachbarten Reihen (18) von Verbindungsmitteln (2) gebildet ist.

4. System nach einem der vorgehenden Ansprüche, wobei die Struktur (8) ein rohrförmiges Element ist, und der Hohlraum (19) ein Tunnel ist, der ausgelegt ist, um das rohrförmige Element zumindest teilweise zu umschließen.

5. System nach einem der vorgehenden Ansprüche, wobei das elastische Abdeckelement (1) eine Matte ist.

6. System nach einem der vorhergehenden Ansprüche, wobei die Verbindungsmittel (2) Anschlagmittel sind.

7. System nach einem der vorgehenden Ansprüche, wobei die Aufhängungsvorrichtung (3) einen Rahmen (17) umfasst, der Längs- und Querbalkenelemente (4, 5) aufweist.

8. Verfahren zum zumindest teilweisen Abdecken einer Struktur (8) auf einem Meeresboden (9) mit einem elastischen Abdeckelement (1), **gekennzeichnet durch** die folgenden Schritte:
a) Aufhängen des elastischen Abdeckelements (1) in mindestens drei Reihen (18) unterhalb einer Aufhängungsvorrichtung (3);
b) Bilden eines Hohlraums (19) unterhalb zumindest eines Abschnitts des elastischen Abdeckelements (1) durch Verbinden einer zentralen Reihe (22) mit einem zentralen Abschnitt des elastischen Abdeckelements (1),;
c) Absenken des elastischen Abdeckelements (1) in einen Körper aus Wasser oberhalb der Struktur (8);
d) Anordnen des elastischen Abdeckelements (1) oberhalb der Struktur (8) derart, dass die Struktur (8) in dem Hohlraum (19) aufgenommen ist;
e) Freigabe des elastischen Abdeckelements (1) von der Aufhängungsvorrichtung (3).

9. Verfahren nach Anspruch 8, wobei das Abdeckelement (1) von der Aufhängungsvorrichtung (3) automatisch freigeben wird.

10. Verfahren nach einem der Ansprüche 8 - 9, wobei der Hohlraum (19) durch jeweils einen Scheitel (21) und einen Tiefpunkt (20) an jeder Seite des Scheitels (21) gebildet wird.

11. Verfahren nach einem der Ansprüche 8 - 10, wobei eine zentrale Reihe von Verbindungsmitteln (2) einen Scheitel (21) erzeugt.

12. Verfahren nach einem der Ansprüche 8 - 11, wobei der Hohlraum (19) tunnelförmig ist.

13. Verfahren nach einem der Ansprüche 8 - 12, wobei die Struktur (8) ein rohrförmiges Element ist.

## Revendications

1. Système pour recouvrir au moins partiellement une structure (8) sur un fond marin (9), comprenant un élément de recouvrement élastique (1), un dispositif de suspension (3) et une pluralité de moyens de connexion (2), les moyens de connexion (2) sont reliés de manière amovible au dispositif de suspension (3) et à l'élément de recouvrement élastique (1), **caractérisé en ce que** la pluralité de moyens de connexion (2) sont disposés en au moins trois rangées (18) sur le dispositif de suspension (3), une partie médiane de l'élément de recouvrement élastique (1) est suspendue par une rangée centrale (22), et une cavité (19) est formée en dessous d'au moins une partie de l'élément de recouvrement élastique (1).

2. Système selon la revendication 1, dans lequel la cavité (19) est formée par un sommet (21) et un nadir (20) de chaque côté du sommet (21), deux côtés extérieurs de l'élément de recouvrement élastique (1) étant reliés aux deux rangées les plus à l'extérieur (18) des moyens de connexion (2) ; les nadirs (20) étant configurés pour être placés sur le fond marin (9) de part et d'autre de la structure (8).

3. Système selon la revendication 2, dans lequel un nadir (20) sur l'élément de recouvrement élastique (1) est formé entre deux rangées adjacentes (18) des moyens de connexion (2).

4. Système selon l'une quelconque des revendications précédentes, dans lequel la structure (8) est un élément tubulaire, et la cavité (19) est un tunnel adapté pour au moins partiellement convoluer l'élément tubulaire.

5. Système selon l'une quelconque des revendications précédentes, dans lequel l'élément de recouvrement élastique (1) est un mat.

6. Système selon l'une quelconque des revendications précédentes, dans lequel les moyens de connexion (2) sont des élingues.

7. Système selon l'une quelconque des revendications précédentes, dans lequel le dispositif de suspension (3) comprend un cadre (17) comportant des éléments de poutre longitudinaux et transversaux (4, 5).

8. Procédé pour recouvrir au moins partiellement une structure (8) sur un fond marin (9) avec un élément de recouvrement élastique (1), **caractérisé par** les étapes consistant à :
a) suspendre l'élément de recouvrement élastique (1) dans au moins trois rangées (18) sous un dispositif de suspension (3) ;
b) former une cavité (19) sous au moins une partie de l'élément de recouvrement élastique (1) en reliant une rangée médiane (22) à une partie centrale de l'élément de recouvrement élastique (1) ;
c) abaisser l'élément de recouvrement élastique (1) dans une masse d'eau située au-dessus de la structure (8) ;
d) placer l'élément de recouvrement élastique (1) sur la structure (8) de telle sorte que la structure (8) soit reçue dans la cavité (19) ;
e) libérer l'élément de recouvrement élastique (1) du dispositif de suspension (3).

9. Procédé selon la revendication 8, dans lequel l'élément de recouvrement (1) est automatiquement libéré du dispositif de suspension (3).

10. Procédé selon l'une quelconque des revendications 8 à 9, dans lequel la cavité (19) est formée par un sommet (21) et un nadir (20) de chaque côté du sommet (21).

11. Procédé selon l'une quelconque des revendications 8 à 10, dans lequel une rangée centrale des moyens de connexion (2) génère un sommet (21).

12. Procédé selon l'une quelconque des revendications 8 à 11, dans lequel la cavité (19) est en forme de tunnel.

13. Procédé selon l'une quelconque des revendications 8 à 12, dans lequel la structure (8) est un élément tubulaire.
